# EUROPEAN PATENT APPLICATION

(11) **EP 0 951 829 A1**
(43) Date of publication of application: **27.10.1999**
(21) Application number: 98930809.3
(22) Date of filing: 02.07.1998
(51) Int. Cl.: A01M 7/00, B05B 3/02

(54) **DEVICE FOR SPRAYING AND ATOMISING, WITH AN OSCILLATING MOVEMENT, FOR PHYTOSANITARY AND AGRICULTURAL TREATMENTS**

(30) Priority: 02.07.1997 ES 9701817 U
(71) Applicant: Cabedo, Sancho, Manuel, 12540 Villarreal (ES)
(72) Inventor: Cabedo, Sancho, Manuel, 12540 Villarreal (ES)
(74) Representative: Del Campo Castel, Domingo
(86) International application number: ES9800193
(87) International publication number: WO9901029

(57) **Abstract**

A spraying and atomizing device for phitosanitary and agricultural treatments, constituted starting from a nozzle with an internal propeller or fan and a plurality of external nozzles to spray a phitosanitary fluid, contained in a tank outside the device, said fan, nozzle and spraying nozzles mounted in a swinging way in relation to diametral opposed pivots, to allow a sideways swinging of the main nozzle and spraying nozzles. This swinging motion is obtained by means of a connecting rod driven by a motor.

## Description

### BACKGROUND OF THE INVENTION

The invention relates to a device for spraying and atomizing liquids over agricultural and similar plantations, for performing an adequate phitosanitary treatment thereof, this device including the corresponding - components to propel the fluid, to drive a fan, and to provide a nozzle forming a fundamental part of the device with swinging motions, its features being centered in the fact that the assembly is installed on a support forming a self-contained unit capable of being coupled to my trailing vehicle,either a trailer, or machine, etc.

An essential purpose of the invention is to provide an assembly from which the own spraying and atomizing device forms a part, which allows all the mentioned functions to be not only performed, but also to make easy its mounting and dismounting with regard to any structure or chassis of the trailing or trailed vehicle, in order to be utilized in an independent way without being dependent of a fixed mounting or forming a part of a machine, as is conventional.

### RELATED ART

In the Utility Models 283.594 and 9203196 of same applicant, an agricultural spraying-atomizing machine for the treatment of agricultural plantations is claimed, this machine including a structure fitted with wheels, so forming what it may be considered as a trailing vehicle, having a driving engine, control gears, driving post, etc., as well as a tank containing a phitosanitary liquid or insecticide to be applied, while in the rear part there is a nozzle constituting a turbofan swinging sideways in order to distribute the liquid to be sprayed and atomized, as long as the machine runs on the surface to be treated, within a wide reach and penetration.

The turbofan is constituted by a sort of cylindrical casing in the interior of which there is a propeller arranged, and on the outside there are spraying nozzles in the strict sense, relying on a pump absorbing the liquid to be treated from a tank provided on the machine structure, and impelling it through said nozzles, collaborating in this operation the fan of the turbine or the nozzle in question, the latter being driven through the own means of the machine or by means of a motor reduction unit, with hydraulic, pneumatic, electric, etc driving.

In any case, the spraying-atomizing unit, ie, the turbofan with the spraying nozzles and the driving means, form an inseparable part of the machine, this being the reason for which the machine is to carry with it said assembly, being unable to be used for other purposes, or to use said turbofan independently from the machine, ie installed on other type of vehicle.

### SUMMARY OF THE INVENTION

The device of the invention, constituting, as above - mentioned, a spraying-atomizer device for phitosanitary agricultural treatments, together with all the said components, such as the nozzle or main cylindrical casing, the inner fan, the spraying nozzles, as well as the pump and driving unit, and even the means performing the swinging motion of the own nozzle, presents the peculiarity of forming an assembly related to a support capable of being mounted or dismounted very easy by means of mere screws and nuts on the chassis of every type of trailing vehicle, either a trailer, or a machine, etc.

The assembly can rely on a universal power imput, fitted in the trailer on which is to be mounted or from which is to be dismounted, or else to include own driving means, both for the fan and for the swinging motions of the nozzle.

Likewise, the trailer or vehicle on which the spraying-atomizing unit is to be mounted, can or cannot rely on the suction-impulsion pump of the treatment liquid; in the first case it would be coupled to a hose connected to the corresponding spraying nozzles foreseen in the spraying-atomizing unit, while in the second case said suction-impulsion pump would form a part of the spraying unit, and coupled through the tank containing the liquid which, logically, will be always installed on the own trailer or trailing vehicle.

In a variant of a preferred embodiment, the driving operation of both the fan and the swinging motion of the nozzle will be jointly performed through a universal power input from the trailer or vehicle on which the own device is installed.

In this embodiment variant, the driving operation can be carried out through a main engine forming a part of the device, through which not only the suction-impulsion pump of the treatment liquid is driven, but also the own swinging motion of the nozzle.

It is also possible that the assembly forms a block to be mounted on a main support fitted in the trailing vehicle. In this case, a ball bearing circular plate is provided as a supporting element for all the assembly. This plate allows the swinging motions of all the assembly of which the own swinging nozzle forms logically a part, to be performed.

Consequently, the device of the invention is capable of being adapted or mounted on any trailer or vehicle having a trailing tank, the term tank being meant a receptable containing the treatment liquid, allowing it to be used in a more rational way and as most convenient manner for the user, this allowing, in turn, the trailer or the trailing vehicle to be used for other tasks when the own spraying device is not used.

### DESCRIPTION OF THE DRAWINGS

In order to complement this description and to aid to a better understanding of the characteristics of the invention, the appending set of drawings, which are apart of this specification, shows, by way of illustrative and non-limiting example, the following:

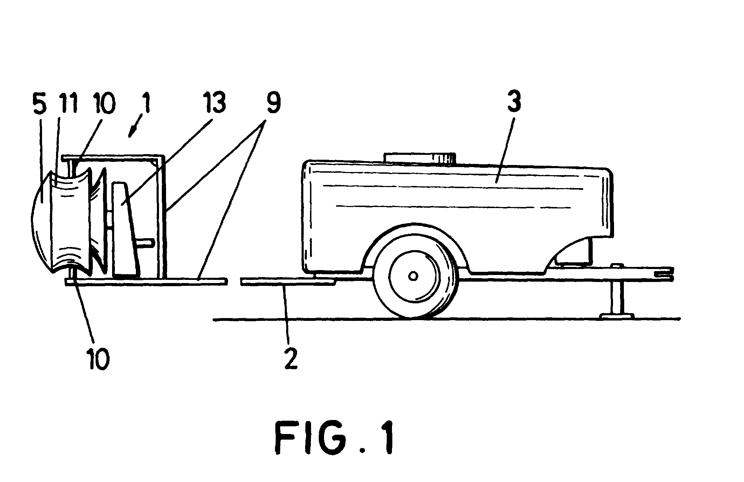

Figure 1 shows a schematic representation of a side elevational view of the assembly of the device in a position to be mounted on a chassis corresponding to a - trailing vehicle fitted with a phitosanitary liquid tank.
Figure 2 shows a sectional view of the assembly fixed to the rear part of the trailing chassis represented in figure 1, wherein the driving operation is performed thru a universal power input whereupon said trailer or trailing vehicle relies on.
Figure 3 shows the same device but, in this case, with the driving starting from an engine forming a part of the own assembly of the device.
Figure 4 shows, finally, the assembly of the device from which a supporting chassis thereof forms a part, this chassis swinging, together with the whole assembly, in relation to the support, fitted, in this case, on the vehicle chassis or trailing vehicle.

### PREFERRED EMBODIMENT OF THE INVENTION

As seen in the above mentioned figures, the device of the invention forms an assembly or unit (1), destined to spray and atomize a phitosanitary liquid utilized to treat plantation surfaces, presenting the peculiarity of - being capable of being mounted/dismounted in relation to the chassis (2) of a trailer having a tank (3) containing the treatment liquid or fluid.

The device includes, as already known, a nozzle (4) having a cylindrical shape and a protecting front casing - (5), this nozzle including internally a propeller or fan (6), the driving of which will be explained later, while the rear part, and in correspondence with a crown (7), includes a set of spraying and atomizing nozzles for the phitosanitary fluid (8).

The assembly is mounted on a support (9) by means of pivots (10), diametrically opposed, constituting a turning shaft through which the nozzle (4) swings sideways to carry out the fluid spraying and atomizing, while the corresponding trailing vehicle runs.

Well then, that support (9) of the assembly is capable of being fixed, in a mounting and dismounting way, to the chassis (2) of a trailing vehicle or a trailer by means of screws (11).

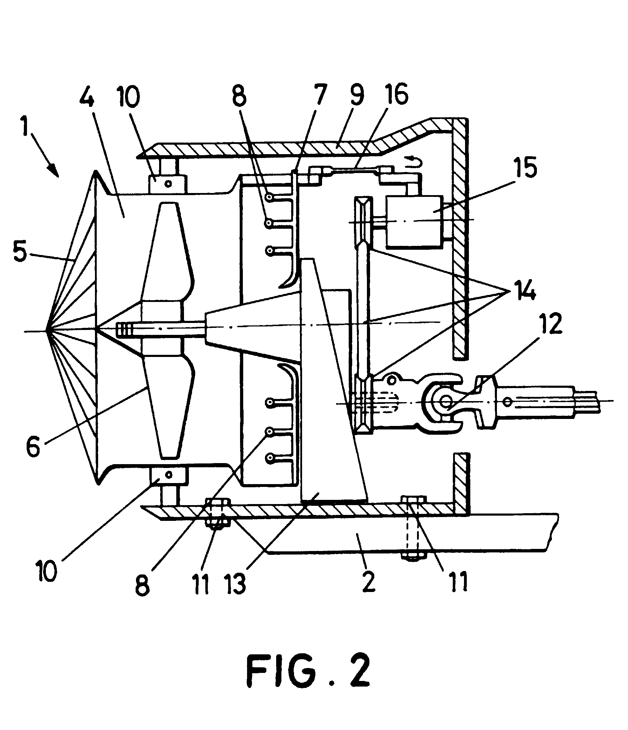

Now, according to the embodiment shown in figure 2, the running is obtained starting from a universal power input (12), which, on the one hand, and through a reducer mounted on a support (13), drives said propeller or fan (8), and on the other hand, through an adequate transmission, consisting of a chain or belt and pulleys (14), drives a motor reduction gear (15), which by means of a connecting rod (16) causes the swinging motions of the own nozzle (4), since that connecting rod being eccentricaly mounted at the output of the motor reduction gear (15), its turning causes the swinging motion of the connecting rod (16), and, therefore, that of the nozzle (4), always in a horizontal plane.

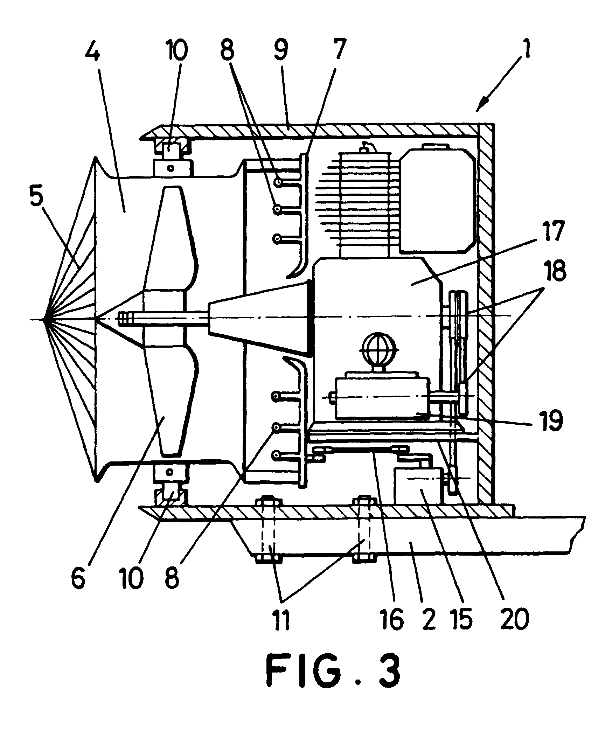

In figure 3, the running, instead of being performed from a universal power input (12), as in the embodiment shown in figure 2, is obtained, in this case, from a gasoline, hydraulic, pneumatic or electric motor, which, on the one hand, drives directly the propeller or fan (6), and on the other hans, through appropiate transmisssions (18), it drives a pressure pump (19) which absorbs/impels the liquid or fluid through the nozzles (8), as well as it drives the motor reduction gear (15), which, thru the connecting rod (16) causes the swinging motion of the chassis (7), and, therefore, that of the nozzle (4), as in the previous case. That is to say, in this case, the fan assembly (6) has been directly coupled to the motor input - (17), which is staticaly mounted on a support (20) fastened to the main support (9).

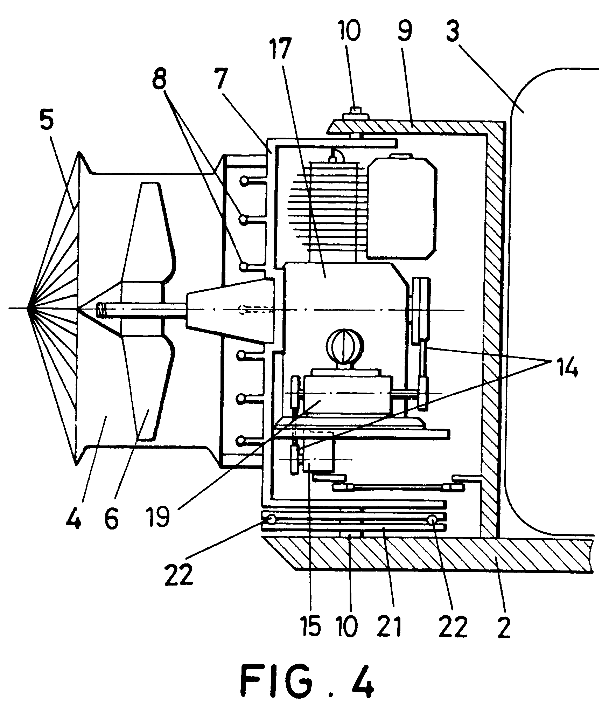

Finally, figure 4 shows how the unit is fully self-contained, as a result or the fact that, in this case, instead of the main support (9), a chassis (7) is included, which is integral with the whole assemby or unit, so that, thru this cassis (7), the swinging motion is performed in relation to the pivots or bolts (10), the assembly being mounted on a fixed support (9') which is integral with the chassis (2) of the trailing vehicle, which includes, as already conventional, a tank (3) containing the treatment fluid. in this case, the main driving motor (17) drives not only the propeller or fan (6), but also the pump (15) and the reducer (15) through the relative transmissions formed of belts and pulleys (14'), the main chassis (7) being mounted on a circular plate (21), with ball bearings (22) in order to facilitate said swinging motion.

## Claims

1. A spraying and atomizing device with swinging motion for phitosanitary and agricultural treatments, which, being constituted starting from a nozzle with an internal propeller or fan, and having externally a plurality of - nozzles for spraying-atomizing a phitosanitary fluid, contained in a tank outside the own device, said nozzle with the propeller and spraying nozzles being swingingly mounted in respect to pivots diametrally opposed, to allow the own nozzle and nozzles to tilt sideways, and, therefore, to obtain an ample band of distibution of the phitosanitary fluid, the swinging motions being performed starting from a connecting rod driven by a motor reduction gear or similar, is essentially characterized in that the assembly of the device is mounted, in a swinging way, on a main support allowing it to be easily mounted/dismounted in relation to the chassis of a trailer or a trailing vehicle carrying a tank containing a phitosanitary fluid or liquid.

2. A spraying and atomizing device with swinging motion for phitosanitary and agricultural treatment, according to claim 1, characterized in that the running of the motor reduction gear for swinging the nozzle and other - elements in relation to the support allowing the assembly to be fastened and self-contained with regard to the chassis of a trailer or a trailing vehicle, as well as the running of the own fan, is performed starting from a universal power input, starting from which, combined with transmission means, the running is transmitted to the motor reduction gear causing the swinging motion of the assembly and to the fan shaft; having been provided that the reducer of the fan shaft running is mounted on the own main support of the assembly.

3. A spraying and atomizing device with swinging motion for phitosanitary and agricultural treatment, according to claim 1, characterized in that the running of the motor reduction gear to cause the swinging motion of the nozzle with the spraying nozzles, as well as the running of the fan shaft and the suction-impulsion pump itself of the phitosanitary fluid through the corresponding nozzles, is performed starting from a motor installed on a chassis or support which is integral with the own main support, said main motor being hydraulic, pneumatic, electric or of any other fuel type, and including transmission means which is adequate to transmit its turning motion to said fan shaft, the suction/impulsion pump and the motor reduction gear causing swinging motions.

4. A spraying and atomizing device with swinginh motion for phitosanitary and agricultural treatment, according to claim 1, characterized in that the assembly forming the nozzle with the internal fan, the spraying/atomizing nozzles, the main running motor, the suction/impulsion pump and the motor reduction gear causing the swinging motions, is mounted on a chassis mounting, in a swinging way with regard to a main support fastened to the chassis of a trailer or a trailing or trailed vehicle, said chassis being supported, at its lower part, by an axial and circular supporting plate of ball bearings, allowing the assembly to swing.
